# NEUE EUROPÄISCHE PATENTSCHRIFT

(11) **EP 3 662 741 B2**
(45) Veröffentlichungstag und Bekanntmachung des Hinweises auf die Entscheidung über den Einspruch: **23.07.2025**
(45) Hinweis auf die Patenterteilung: 24.08.2022
(21) Anmeldenummer: 19202909.8
(22) Anmeldetag: 14.10.2019
(51) Int. Cl.: A01D 89/00

(54) **LANDWIRTSCHAFTLICHE ARBEITSMASCHINE SOWIE VERFAHREN ZUM BETREIBEN EINER LANDWIRTSCHAFTLICHEN ARBEITSMASCHINE**
AGRICULTURAL MACHINE AND METHOD FOR OPERATING AN AGRICULTURAL MACHINE
MACHINE DE TRAVAIL AGRICOLE AINSI QUE PROCÉDÉ DE FONCTIONNEMENT D'UNE MACHINE DE TRAVAIL AGRICOLE

(30) Priorität: 06.12.2018 DE 102018131142
(43) Veröffentlichungstag der Anmeldung: 10.06.2020
(73) Patentinhaber: CLAAS Selbstfahrende Erntemaschinen GmbH, 33428 Harsewinkel (DE)
(72) Erfinder: Nüvemann, Tobias, 48336 Sassenberg (DE); Middelberg, René, 49080 Osnabrück (DE); Terörde, Stefan, 48231 Warendorf (DE); Speckamp, Dirk, 59073 Hamm (DE); Bussmann, Christoph, 33428 Harsewinkel (DE); Barrelmeyer, Thomas, 33790 Halle/Westfalen (DE)
(74) Vertreter: CLAAS Gruppe

(56) Entgegenhaltungen:
- EP-A1- 2 272 312
- EP-A2- 0 887 660
- WO-A1-2015/063089
- WO-A1-2018/206664
- DE-A1- 102005 005 556
- US-B1- 6 389 785

## Beschreibung

Die vorliegende Erfindung betrifft eine landwirtschaftliche Arbeitsmaschine gemäß dem Oberbegriff des Anspruches 1. Weiterhin betrifft die vorliegende Erfindung ein Verfahren zum Betreiben einer landwirtschaftlichen Arbeitsmaschine gemäß dem Anspruch 9.

Landwirtschaftliche Arbeitsmaschinen kommen zum Einsatz, um Erntegut von einem Feld abzuernten, aber auch um bereits abgeerntetes Erntegut aufzunehmen und weiterzubearbeiten (siehe WO 2015/063089).

Dabei kann das Erntegut, beispielsweise Raps oder Gras, in Form von Schwaden auf dem Feldboden abgelegt und in einem nachfolgenden Arbeitsgang durch eine landwirtschaftliche Arbeitsmaschine mit voreingestellten Arbeitsparametern zur weiteren Bearbeitung aufgenommen werden. Beim Legen der Schwaden in Vorbereitung auf dessen nachfolgenden Aufnahme kann es beispielsweise aufgrund von Bedienungs- oder Einstellfehlern zu Unregelmäßigkeiten im Schwad kommen. Die Gleichmäßigkeit beim Legen von Schwaden wird zudem durch die Bodenbeschaffenheit des Feldes als auch Bestandsdichteschwankungen beeinflusst. Unregelmäßigkeiten der Schwaden, wie ein seitlicher Versatz, Änderungen in der Breite und/oder Höhe des Schwads, eine variierende Dichte des Schwads und dergleichen mehr, können zu Gutflussproblemen in der landwirtschaftlichen Arbeitsmaschine führen bzw. Einfluss auf die Qualität des Erzeugnisses haben, welches aus der Bearbeitung durch die landwirtschaftliche Arbeitsmaschine resultiert.

Aus der EP 0 887 660 B1 ist eine landwirtschaftliche Arbeitsmaschine zur Aufnahme eines auf einem Feldboden abgelegten Schwads bekannt. Die Arbeitsmaschine umfasst eine steuer- oder regelbare Aufnahmevorrichtung zur Aufnahme des Schwads, zumindest ein steuer- oder regelbares Arbeitsorgan zur Bearbeitung des aufgenommenen Schwads, zumindest eine Sensoranordnung zur Detektion der Kontur des Feldbodens oder eines auf dem Feldboden abgelegten Schwads sowie eine Steuerungseinrichtung, die zur Auswertung von Signalen der zumindest einen Sensoranordnung sowie zur Ansteuerung der Aufnahmevorrichtung und des zumindest einen Arbeitsorgans anhand von vorgegebenen Arbeitsparametern eingerichtet ist.

Die aus der EP 0 887 660 B1 bekannte landwirtschaftliche Arbeitsmaschine erfasst kontinuierlich die Bodenkontur respektive den Schwad und ermittelt eine Spur, die der Spurführung der Landmaschine dient. Zudem lässt sich der Querschnitt des Schwads bestimmen, welcher in Verbindung mit einer Abtastfrequenz der als Laserentfernungsmessvorrichtung ausgeführten Sensoranordnung sowie der Fahrgeschwindigkeit der Arbeitsmaschine zur Ermittlung des Schwadvolumens verwendet wird. Der ermittelte Querschnitt des Schwads wird zur Einstellung der Fahrgeschwindigkeit verwendet, um die Arbeitsmaschine mit einem konstanten oder maximalen Erntegutdurchsatz zu betreiben. Die landwirtschaftliche Arbeitsmaschine gemäß der EP 0 887 660 B1 setzt eine kontinuierliche Detektion und Auswertung der durch die Laserentfernungsmessvorrichtung Signale voraus, um daraus fortlaufend die Fahrgeschwindigkeit der Arbeitsmaschine bestimmen zu können.

Ausgehend vom vorstehend genannten Stand der Technik liegt der Erfindung die Aufgabe zugrunde, eine landwirtschaftliche Erntemaschine sowie ein Verfahren zum Betreiben einer landwirtschaftlichen Erntemaschine bereitzustellen, welche sich durch eine vereinfachte Betriebsweise auszeichnet.

Diese Aufgabe wird vorrichtungsseitig durch eine landwirtschaftliche Erntemaschine mit den Merkmalen des Anspruches 1 gelöst. Weiterhin wird die Aufgabe durch ein Verfahren zum Betreiben einer landwirtschaftlichen Arbeitsmaschine in einem Erntemodus gemäß dem nebengeordneten Anspruch 9 gelöst.

Vorteilhafte Weiterbildungen sind Gegenstand der Unteransprüche.

Gemäß dem Anspruch 1 wird eine landwirtschaftliche Arbeitsmaschine, die zur Aufnahme eines auf einem Feldboden abgelegten Schwads mit voreingestellten Arbeitsparametern eingerichtet ist, vorgeschlagen, wobei die Arbeitsmaschine eine steuer- oder regelbare Aufnahmevorrichtung zur Aufnahme des Schwads, zumindest ein steuer- oder regelbares Arbeitsorgan zur Bearbeitung des aufgenommenen Schwads, zumindest eine Sensoranordnung zur Detektion zumindest einer Eigenschaft des auf dem Feldboden abgelegten Schwads sowie eine Steuerungseinrichtung, die zur Auswertung von Signalen der zumindest einen Sensoranordnung sowie zur Ansteuerung der Aufnahmevorrichtung und des zumindest einen Arbeitsorgans anhand von vorgegebenen Arbeitsparametern eingerichtet ist, umfasst. Erfindungsgemäß ist die Steuerungseinrichtung dazu eingerichtet ist, durch die Auswertung der zumindest einen detektierten Eigenschaft das Auftreten einer Unregelmäßigkeit im Schwad zu erkennen und nur für die Dauer der Unregelmäßigkeit im Schwad eine automatische Anpassung der Aufnahmegeschwindigkeit, mit der die Arbeitsmaschine den Schwad aufnimmt, und zumindest eines Arbeitsparameters zur Ansteuerung der Aufnahmevorrichtung und/oder des zumindest einen Arbeitsorgans der landwirtschaftlichen Arbeitsmaschine vorzunehmen. Auf diese Weise können aktive Eingriffe in die Steuerung oder Regelung der Arbeitsmaschine durch die Steuerungseinrichtung auf das für das Beseitigen der Unregelmäßigkeit im Schwad durch dessen Aufnahme und anschließende Bearbeitung Notwendige reduziert werden. Eine Unregelmäßigkeit eines Schwads lässt sich unter anderem durch das Auftreten unterschiedlichen Höhen- oder Volumensignale bezogen auf eine Referenzebene, wie den Feldboden, als Eigenschaft des Schwads detektieren. Weitere Aspekte, anhand derer auf eine Unregelmäßigkeit des Schwads geschlossenen werden kann, sind ein seitlicher Versatz im Schwadverlauf und/oder eine Breitenänderung die jeweils allein oder in Verbindung mit anderen Unregelmäßigkeiten, insbesondere Höhen bzw. Volumenschwankungen, auftreten können. Weitere Eigenschaften des Schwads, die auf das Auftreten einer Unregelmäßigkeit schließen lassen, sind ein verdrehter Schwad, eine Änderung der Ausrichtung von Halmen im Schwad, eine unterschiedliche Schwaddichte und/oder Feuchtigkeit des Schwads, unterschiedliche Farben des Schwads und dergleichen mehr.

Hierzu kann die die Steuerungseinrichtung dazu eingerichtet sein, Arten von Unregelmäßigkeiten zu klassifizieren und zu gewichten. Um nicht auf jede auftretende geringfügige Unregelmäßigkeit reagieren zu müssen, kann vorgesehen sein, die Unregelmäßigkeit hinsichtlich ihrer Art zunächst zu klassifizieren, um anschließend anhand eines Soll-Ist-Vergleichs, mit dem die detektierten Unregelmäßigkeiten gewichtet werden, zu entscheiden, ob das Einleiten von Maßnahmen sinnvoll ist, um auf die detektierte Unregelmäßigkeit im Schwad zu reagieren. Hierfür können für jede Art von Unregelmäßigkeit im Schwad, die durch die Steuerungseinrichtung klassifizierbar ist, Toleranzwerte hinterlegt. Erst bei einem Überschreiten eines oder mehrerer der Toleranzwerte werden die Maßnahmen eingeleitet, mit denen die landwirtschaftliche Arbeitsmaschine auf das Erkennen des Auftretens der Unregelmäßigkeit reagiert. Auf diese Weise lassen sich unnötige Eingriffe in den Betriebsablauf der Arbeitsmaschine vermeiden.

Vorzugsweise kann die Steuerungseinrichtung dazu eingerichtet sein, nachstehende Verfahrensschritte automatisch auszuführen:
a. Auswertung der Signale der zumindest einen durch die zumindest eine Sensoranordnung detektierten Eigenschaft, um das Auftreten einer Unregelmäßigkeit im Schwad zu erkennen,
b. automatische Anpassung der Aufnahmegeschwindigkeit mit dem Erkennen des Auftretens der Unregelmäßigkeit, mit der die Arbeitsmaschine den Schwad aufnimmt,
c. Anpassung zumindest eines Arbeitsparameters zur Ansteuerung der Aufnahmevorrichtung und/oder des zumindest einen Arbeitsorgans der landwirtschaftlichen Arbeitsmaschine,
d. Bereitstellung einer maximalen Antriebsleistung durch Ansteuerung eines Antriebsmotors, der die Arbeitsmaschine mit der erforderlichen Antriebsleistung versorgt,
e. Bearbeitung der Unregelmäßigkeit, und
f. Rückführung aller geänderter Arbeitsparameter auf die voreingestellten Arbeitsparameter.

Gemäß einer bevorzugten Ausführung kann die Steuerungseinrichtung dazu eingerichtet sein, die Fahrgeschwindigkeit einer als selbstfahrenden Erntemaschine ausgeführten landwirtschaftlichen Arbeitsmaschine für die Dauer der Unregelmäßigkeit zu reduzieren. Die selbstfahrende Erntemaschine kann als ein Mähdrescher oder als ein Feldhäcksler ausgeführt sein. Hierzu kann die selbstfahrende Erntemaschine mit einer als Vorsatzgerät ausgeführten Aufnahmevorrichtung ausgestattet sein, welches zur Aufnahme des Schwads eingerichtet ist: Dabei können die Vorsatzgeräte in Abhängigkeit von der Ausführung der selbstfahrenden Erntemaschine als Mähdrescher oder als Feldhäcksler unterschiedlich ausgestaltet sein. Während bei dem Feldhäcksler die aufgenommene Schwad gehäckselt und auf Transportwagen überladen wird, erfolgt bei dem Mähdrescher der sogenannte Schwaddrusch, bei welchem Erntegut, insbesondere Gras, in Form von Schwaden auf dem Feldboden abgelegt wird und nach der Aufnahme der Schwad durch den Mähdrescher das Ausdreschen des aufgenommenen Erntegutes zur Trennung in Korn- und Nichtkornbestandteile durchgeführt wird. Der Schwaddrusch kommt insbesondere bei der Ernte von Reis, Raps oder Grassamen zur Anwendung.

Bei einer als selbstfahrender Mähdrescher oder selbstfahrender Feldhäcksler ausgeführten landwirtschaftlichen Arbeitsmaschine ist die Steuerungseinrichtung dazu eingerichtet, als zumindest einen Arbeitsparameter zur Ansteuerung der Aufnahmevorrichtung und/oder des zumindest einen Arbeitsorganes die Einzugsgeschwindigkeit zu reduzierten. Hierzu kann die Steuerungseinrichtung dazu eingerichtet sein, die Drehzahl einer Antriebsvorrichtung der Aufnahmevorrichtung der landwirtschaftlichen Arbeitsmaschine zu reduzieren.

Insbesondere kann bei einem Mähdrescher zur Reduzierung der Einzugsgeschwindigkeit eine Drehrichtungsumkehr eines Reversiermotors eines Einzugsaggregates als Arbeitsparameter durch die Steuerungseinrichtung angesteuert werden. Auf diese Weise lässt sich im Fall eines geringen Schwadvolumens als detektierte Unregelmäßigkeit in dem Einzugsaggregat ein Erntegutpuffer aufbauen, der dann zeitlich versetzt den nachfolgenden Arbeitsorganen zugeführt wird. Das Einzugsaggregat kann als Schrägförderer im Einzugskanal des Mähdreschers ausgebildet sein.

Weiterhin kann bei einem Mähdrescher vorgesehen sein, dass die Steuerungseinrichtung dazu eingerichtet ist, als zumindest einen weiteren Arbeitsparameter die Drehzahl einer Dreschtrommel einer Dreschvorrichtung und /oder eines Trennrotor einer Abscheidevorrichtung zu erhöhen. Des Weiteren kann im Fall des Mähdreschers die Steuerungseinrichtung dazu eingerichtet sein, einen stattfindenden Überladevorgang zu unterbrechen. Hierzu kann durch die Steuerungseinrichtung die temporäre Abschaltung einer Korntankentleervorrichtung veranlasst werden. Die Anpassung eines oder mehrerer Arbeitsparameter des Mähdreschers hängt dabei von der Art der Unregelmäßigkeit des Schwads ab.

Bei der Ausführung der landwirtschaftlichen Arbeitsmaschine als selbstfahrender Feldhäcksler kann die Steuerungseinrichtung weiter dazu eingerichtet sein, die die Schnittlänge zu variieren. Hierzu kann die Drehzahl von Einzugswalzen eines Einzugsorgans und/oder einer Häckseltrommel des Feldhäckslers variiert werden. Weiterhin kann die Steuerungseinrichtung dazu eingerichtet sein, als einen weiteren Arbeitsparameter die Gutvorpressung durch die Einzugswalzen des Einzugsorgans anzupassen. Des Weiteren kann die Steuerungseinrichtung dazu eingerichtet sein, die Höhe eines Niederrollenhalters der Aufnahmevorrichtung des Feldhäckslers anzupassen. Die Anpassung eines oder mehrerer Arbeitsparameter des Feldhäckslers hängt dabei von der Art der Unregelmäßigkeit des Schwads ab.

Weiter bevorzugt kann die Steuerungseinrichtung dazu eingerichtet sein, die Fahrgeschwindigkeit eines Zugfahrzeugs einer gezogenen, als eine Ballenpresse oder als ein Ladewagen ausgeführten, landwirtschaftlichen Arbeitsmaschine für die Dauer der Unregelmäßigkeit zu reduzieren. Bei der Ausführung der landwirtschaftlichen Arbeitsmaschine als Ballenpresse oder Ladewagen kann die Steuerungseinrichtung dazu eingerichtet sein, Schneidelemente einer Schneidvorrichtung der Ballenpresse oder des Ladewagens auszuschwenken, um einem Gutstau vorzubeugen. Verfügt die als Ladewagen ausgeführte Arbeitsmaschine über einen Förderboden, so kann die Steuerungseinrichtung dazu eingerichtet sein, eine den Förderboden betätigende Aktorik anzusteuern, um Erntegut in einen rückwärtigen Teil des Ladewagens zu fördern.

Des Weiteren kann die Steuerungseinrichtung dazu eingerichtet sein, einen Antriebsmotor der landwirtschaftlichen Arbeitsmaschine oder des Zugfahrzeugs zur Bereitstellung seiner maximalen Motorleistung für die Dauer der Unregelmäßigkeit bereitzustellen.

Erfindungsgemäß ist die zumindest eine Sensoranordnung für eine vorausschauende Detektion eines Beginns und eines Endes des Auftretens der Unregelmäßigkeit eingerichtet. Auf diese Weise kann frühzeitig eine Anpassung des Verhaltens der Arbeitsmaschine eingeleitet werden, um auf die detektierte Unregelmäßigkeit des Schwads zu reagieren.

Erfindungsgemäß ist die Steuerungseinrichtung dazu eingerichtet, anhand des detektierten Beginns und Endes des Auftretens der Unregelmäßigkeit die voraussichtliche Bearbeitungsdauer der Unregelmäßigkeit durch die landwirtschaftliche Arbeitsmaschine zu bestimmen. Hierdurch lässt sich insbesondere die rechtzeitige Rückführung aller geänderten Arbeitsparameter auf die voreingestellten Arbeitsparameter bewirken, wenn die Unregelmäßigkeit im Schwad vollständig von der Aufnahmevorrichtung aufgenommen wurde.

Erfindungsgemäß ist die Steuerungseinrichtung dazu eingerichtet, nach der Aufnahme und Bearbeitung des unregelmäßigen Schwads die Änderung von Fahrgeschwindigkeit und des zumindest einen Arbeitsparameters auf die voreingestellten zurückzuführen.

Gemäß einer bevorzugten Ausführung kann die zumindest eine Sensoranordnung zur berührungslosen Detektion der zumindest einen Eigenschaft des auf dem Feldboden abgelegten Schwads eingerichtet sein. Dabei kann die Sensoranordnung zumindest einen Laserscanner, insbesondere einen LIDAR-Sensor, oder zumindest eine Kamera umfassen. Die berührungslos arbeitende Sensoranordnung ermöglicht die vorausschauende Detektion von Unregelmäßigkeiten des aufzunehmenden Schwads.

Alternativ oder zusätzlich kann die zumindest eine Sensoranordnung Tastmittel zur Detektion der zumindest einen Eigenschaft des auf dem Feldboden abgelegten Schwads aufweisen. Bei dem Tastmittel kann es sich um an der Aufnahmevorrichtung angeordnete Tastbügel handeln, welche zumindest die Detektion des Verlaufs des Schwads ermöglichen.

Weiterhin wird die eingangs gestellte Aufgabe durch ein Verfahren mit den Merkmalen des Anspruches 9 gelöst.

Gemäß dem Anspruch 9 wird ein Verfahren zum Betreiben einer landwirtschaftlichen Arbeitsmaschine vorgeschlagen, in welchem zumindest ein auf einem Feldboden abgelegter Schwad kann die Steuerungseinrichtung dazu eingerichtet sein aufgenommen wird, wobei der Schwad durch eine steuer- oder regelbare Aufnahmevorrichtung aufgenommen und der aufgenommene Schwad durch zumindest ein steuer- oder regelbares Arbeitsorgan bearbeitet wird, wobei durch zumindest eine Sensoranordnung zumindest eine Eigenschaft des auf dem Feldboden abgelegten Schwads detektiert wird, sowie dass eine Steuerungseinrichtung verwendet wird, durch welche Signale der zumindest einen Sensoranordnung auswertet sowie die Aufnahmevorrichtung und das zumindest eine Arbeitsorgans anhand von voreingestellten Arbeitsparametern angesteuert werden, gekennzeichnet durch die Verfahrensschritte,
- a. Auswertung der Signale der zumindest einen durch die zumindest eine Sensoranordnung detektierten Eigenschaft, um das Auftreten einer Unregelmäßigkeit im Schwad zu erkennen,
- b. automatische Anpassung der Aufnahmegeschwindigkeit mit dem Erkennen des Auftretens der Unregelmäßigkeit, mit der die Arbeitsmaschine den Schwad aufnimmt,
- c. Anpassung zumindest eines Arbeitsparameters zur Ansteuerung der Aufnahmevorrichtung und/oder des zumindest einen Arbeitsorgans der landwirtschaftlichen Arbeitsmaschine,
- d. Bereitstellung einer maximalen Antriebsleistung durch Ansteuerung eines Antriebsmotors, der die Arbeitsmaschine mit der erforderlichen Antriebsleistung versorgt,
- e. Bearbeitung der Unregelmäßigkeit, und
- f. Rückführung aller geänderter Arbeitsparameter auf die voreingestellten Arbeitsparameter.
genschaft ausgewertet werden, um Beginn und Ende des Auftretens der Unregelmäßigkeit im Schwad zu bestimmen und die Art der Unregelmäßigkeit zu klassifizieren und zu gewichten.

Dabei können die Signale der zumindest einen durch die zumindest eine Sensoranordnung detektierten Eigenschaft ausgewertet werden, um Beginn und Ende des Auftretens der Unregelmäßigkeit im Schwad zu bestimmen und die Art der Unregelmäßigkeit zu klassifizieren und zu gewichten.

Die vorliegende Erfindung wird nachstehend anhand eines in den Zeichnungen dargestellten Ausführungsbeispieles näher erläutert.

Es zeigen:
- Fig. 1: schematisch eine Seitenansicht einer als Mähdrescher ausgeführten landwirtschaftlichen Arbeitsmaschine;
- Fig.2: schematisch eine Seitenansicht einer als Feldhäcksler ausgeführten landwirtschaftlichen Arbeitsmaschine;
- Fig.3: schematische eine Seitenansicht einer von einem Zugfahrzeug gezogenen, als Ballenpresse ausgeführten landwirtschaftlichen Arbeitsmaschine;
- Fig.4: ein Ablaufdiagramm eines Verfahrens zum Betreiben einer landwirtschaftlichen Arbeitsmaschine.

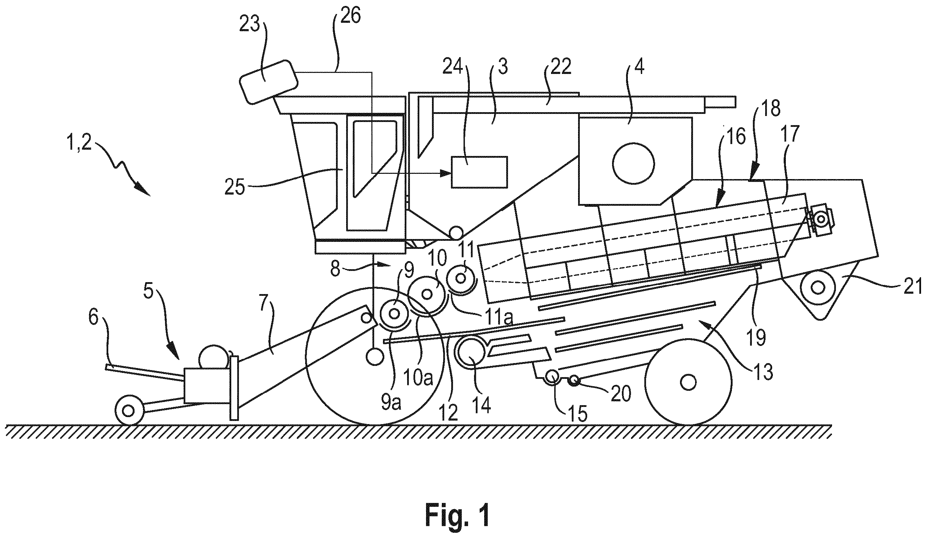

In Fig. 1 ist schematisch eine Seitenansicht einer als selbstfahrender Mähdrescher 2 ausgeführten landwirtschaftlichen Arbeitsmaschine 1 dargestellt. Die Arbeitsmaschine 1 weist eine Fahrerkabine 25, einen hinter dieser liegenden Korntank 3 sowie anschließend an diesen einen als Brennkraftmaschine ausgeführten Antriebsmotor 4 auf. Weiterhin nimmt die als selbstfahrender Mähdrescher 2 ausgeführte Arbeitsmaschine 1 in ihrem Frontbereich eine Aufnahmevorrichtung 5 zur Aufnahme eines Schwads auf. Die Aufnahmevorrichtung 5 weist einen hydraulisch verstellbaren Niederhalter 6 auf. Die Aufnahmevorrichtung 5 nimmt das zuvor als Schwad auf dem Feldboden abgelegte Erntegut, wie Raps oder Reis auf, woraufhin das Erntegut aus der Aufnahmevorrichtung 5 mittels eines Schrägförderers 7 einer Dresch- und Trenneinrichtung 8 zugeführt wird. Diese Dresch- und Trenneinrichtung 8 ist als Mehrtrommelanordnung eines Tangentialdreschwerks ausgebildet und besteht aus einer Vorbeschleunigungstrommel 9, einer Dreschtrommel 10 und einer Wendetrommel 11. Diesen Trommeln 9, 10 und 11 sind jeweils Abscheidekörbe 9a, 10a und 11a zugeordnet. Die geernteten Körner oder Früchte gelangen durch die Abscheidekörbe 9a, 10a und 11a auf einen Vorbereitungsboden 12, über welchen sie schwingend bewegten Sieben einer Reinigungsvorrichtung 13 zugeführt werden. Mit der Reinigungsvorrichtung 13 wirkt ein Reinigungsgebläse 14 zusammen, welches im Bereich der Siebe einen Luftstrom erzeugt, wodurch Spreu und Kurzstroh aus dem Mähdrescher 1 herausbefördert werden. Die durch die Siebe der Reinigungsvorrichtung 13 hindurchtretenden Körner oder Früchte gelangen in eine Körnerschnecke 15, die diese zu einem mit dem Korntank 3 verbundenen, nicht näher dargestellten Körnerelevator transportiert.

Sämtliche Anteile des Erntegutes, die die Abscheidekörbe 9a, 10a und 11a nicht in Richtung des Vorbereitungsbodens 12 passieren, werden mittels der Wendetrommel 11 oder, alternativ dazu, mittels einer Strohwendetrommel, einer Abscheidevorrichtung 16 zur Restkornabscheidung zugeführt. Diese Abscheidevorrichtung 16 zur Restkornabscheidung weist bei dem in der Fig. 1 dargestellten Mähdrescher 1 zumindest ein in Längsrichtung des Mähdreschers verlaufendes trommelartiges Förderorgan 17 auf, das auch als Trennrotor bezeichnet wird und an seinem radialen Umfang schraubenlinienartig verlaufende Förderelemente hat, welche im Einzelnen nicht dargestellt sind.

Das trommelartige Förderorgan 17 ist weiterhin radial von einem Abscheidegehäuse 18 umschlossen, welches in seinem unteren Bereich nicht näher dargestellte Abscheideöffnungen aufweist und im oberen Bereich geschlossen, also undurchlässig ist. Durch die vorgenannten Öffnungen des Abscheidegehäuses 18 gelangen Restkorn sowie Nichtkornbestandteile auf einen Rücklaufboden 19, der diese Bestandteile der Reinigungseinrichtung 13 zuführt. Die Bestandteile dieses Erntegutstromes, die von den Sieben der Reinigungsvorrichtung 13 abgeschieden werden, gelangen in eine Förderschnecke 20, die diese Bestandteile des Erntegutes einer nicht näher dargestellten Überkehr zuführt. Die Überkehr fördert diese Bestandteile des Erntegutes zurück in die Dresch- und Trenneinrichtung 8. Das durch das Abscheidegehäuse 18 geförderte Stroh verlässt dieses an dessen hinterem Ende, wo das Stroh in einen Strohhäcksler 21 gelangt. Zum Entleeren des Korntanks 3 ist eine Korntankentleervorrichtung 22 vorgesehen.

Am Kabinendach ist eine Sensoranordnung 23 angeordnet, welche insbesondere als Laserscanner oder als Kamera ausgebildet ist. Eine abweichende Anordnung der Sensoranordnung 23 an der Arbeitsmaschine 1 oder der Aufnahmevorrichtung 5 ist ebenfalls dankbar. Mittels der Sensoranordnung 23 ist eine vorausschauende Analyse des aufzunehmenden Schwads möglich. Die Sensoranordnung 23 steht durch ein Bussystem 26 mit einer Steuerungseinrichtung 24 in Verbindung. Die Steuerungseinrichtung 24 ist zur Verarbeitung und Auswertung der von der Sensoranordnung 23 erfassten Signale eingerichtet. Des Weiteren ist die Steuerungseinrichtung 24 zur Ansteuerung der Arbeitsorgane, d.h. der Aufnahmevorrichtung 5, der Dresch- und Trenneinrichtung 8, der Abscheidevorrichtung 16 sowie des Antriebsmotors 4 des Mähdreschers 2 eingerichtet.

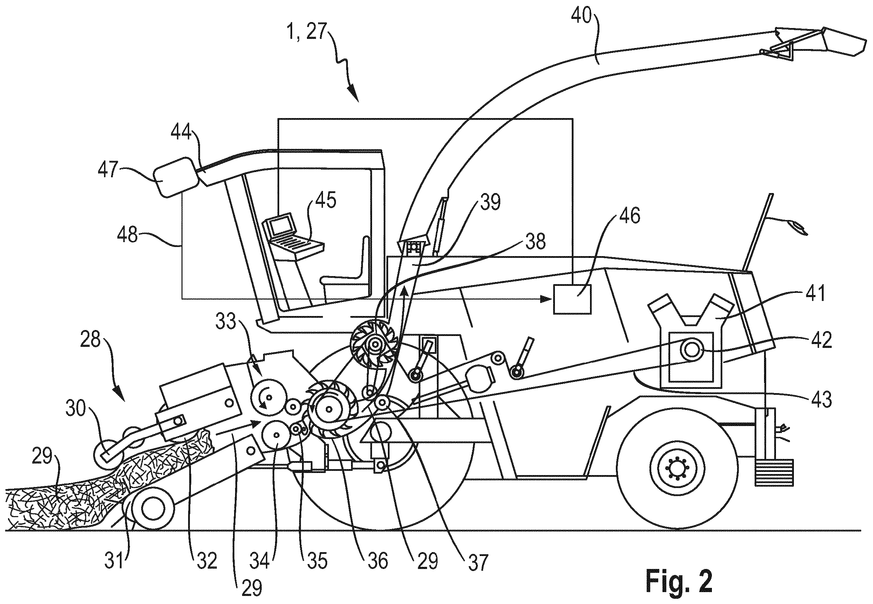

Fig. 2 zeigt eine als Feldhäcksler 27 ausgeführte landwirtschaftliche Arbeitsmaschine 1, die in ihrem frontseitigen Bereich ein als Pick-up ausgeführte Aufnahmevorrichtung 28 aufnimmt, die zur Aufnahme von in Form eines Schwads 29 abgelegten Erntegutes eingerichtet ist. Die Aufnahmevorrichtung 28 ist so gestaltet, dass sie den Schwad 29 zwischen einer Niederhaltereinrichtung 30 und einer Aufsammeltrommel 31 aufnimmt und im rückwärtigen Bereich der Aufnahmevorrichtung 28 einer Querförderschnecke 32 zuführt. Die Querförderschnecke 32 übergibt das Erntegut nahezu mittig der Aufnahmevorrichtung 28 nachgeordneten Einzugsorganen 33. Im dargestellten Ausführungsbeispiel werden die Einzugsorgane 3 von paarweise angeordneten Einzugswalzen 34 und diesen nachgeordneten Vorpresswalzen 35 gebildet. Nachdem der Erntegutstrang die Einzugsorgane 33 passiert hat, wird er in deren rückwärtigen Bereich an eine rotierend angetriebene Häckseltrommel 36 übergeben. Durch die kinetische Energie der umlaufenden Häckseltrommel 36 tritt das zerkleinerte Erntegut im rückwärtigen Bereich der Häckseltrommel 36 mit hoher Geschwindigkeit aus dieser aus und wird an paarweise angeordnete Crackerwalzen 37 übergeben. Die Crackerwalzen 37 bilden dabei eine sogenannte Nachzerkleinerungseinrichtung, die optional zum Einsatz kommen kann. Nachdem das Erntegut die Nachzerkleinerungseinrichtung passiert hat, gelangt es in den Wirkbereich eines Nachbeschleunigers 38. Der Nachbeschleuniger 38 prägt dem Erntegut in an sich bekannter Weise zusätzliche kinetische Energie auf, mittels derer das Erntegut über einen im Wesentlichen in vertikaler Richtung weisenden Auswurfschacht 39 und einen diesem nachgeordneten schwenk- und drehbeweglichen Auswurfkrümmer 40 aus dem Feldhäcksler 2 herausgefördert wird. Im dargestellten Ausführungsbeispiel bilden die Aufnahmevorrichtung 28, die Einzugsorgane 33, die Häckseltrommel 36, die optionale Nachzerkleinerungseinrichtung 37, sowie der Nachbeschleuniger 38 Arbeitsorgane der landwirtschaftlichen Arbeitsmaschine 1.

Weiter weist der Feldhäcksler 27 zumindest einen Antriebsmotor 41 zugeordnet, dessen abtriebsseitige Riemenscheibe 42 von einem Antriebsriemen 43 umschlungen wird. Der Antriebsriemen 43 bildet einen Hauptantriebsriemen. In einer Kabine 44 des Feldhäckslers 2 befindet sich eine Ein- und Ausgabeeinheit 45 einer Steuerungseinrichtung 46, die unter anderem der Steuerung der Arbeitsorgane sowie des Antriebsmotors 41 dient. Am Dach der Kabine 44 des Feldhäckslers 27 ist eine Sensoranordnung 47 angeordnet, welche insbesondere als Laserscanner oder als Kamera ausgebildet ist. Eine abweichende Anordnung der Sensoranordnung 47 an der Arbeitsmaschine 1 oder der Aufnahmevorrichtung 28 ist ebenfalls dankbar. Mittels der Sensoranordnung 47 ist eine vorausschauende Analyse des aufzunehmenden Schwads möglich. Die Sensoranordnung 47 steht durch ein Bussystem 48 mit der Steuerungseinrichtung 46 in Verbindung.

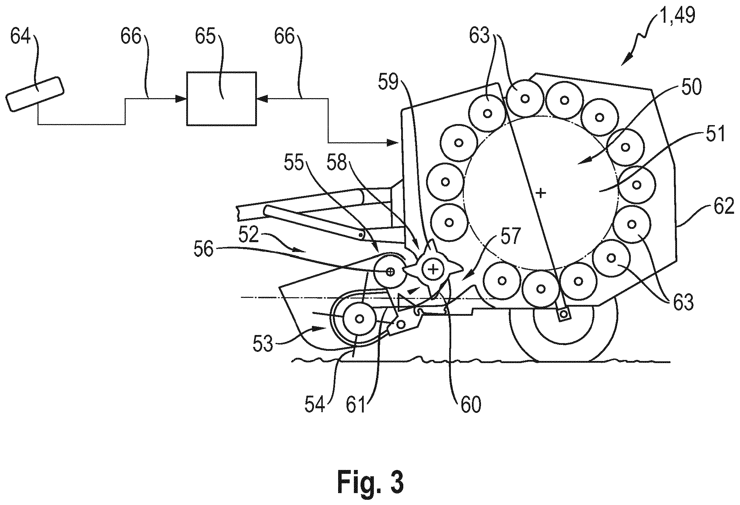

In Fig. 3 ist eine landwirtschaftliche Arbeitsmaschine 1 in Form einer Ballenpresse 49 in einer schematischen Seitenansicht dargestellt. Die Arbeitsmaschine 1 in Form der Ballenpresse 49 wird üblicherweise durch ein Zugfahrzeug wie einen Traktor (nicht dargestellt) gezogen und mittels einer mit diesem koppelbaren Antriebswelle zum Antrieb von Förder- und Verarbeitungseinrichtungen, nachfolgend auch als Arbeitsorgane bezeichnet, mit Energie versorgt. Die dargestellte Ballenpresse 49 nimmt im Erntebetrieb auf dem Feldboden liegendes Erntegut auf, beispielsweise in einem Schwad abgelegtes Stroh oder Gras, und verarbeitet dieses zu einem in einer Presskammer 50 gepressten Ballen 51, welcher nach seiner Fertigstellung heckseitig aus der Ballenpresse 49 ausgeworfen wird.

Das Erntegut wird hierbei von der Ballenpresse 49 mittels einer Aufnahmevorrichtung 52, einer sogenannten Pickup, welche frontseitig eine antreibbare Aufsammeltrommel 53 mit daran angeordneten Zinken 54 aufweist, vom Boden aufgenommen, um es den weiteren Förder- und Verarbeitungseinrichtungen der Ballenpresse 49 zuzuführen. Nach der Aufnahme durch die Aufsammeltrommel 53 wird das Erntegut zunächst einem der Aufsammeltrommel 53 nachgeordneten Förderorgan 55 zugeführt. Das Förderorgan 55 erstreckt sich dabei, ebenso wie die Aufsammeltrommel 53, im Wesentlichen über eine gesamte Breite der Aufnahmevorrichtung 52.

Das teilweise spiralförmig ausgebildete Förderorgan 55 ist antreibbar um eine Drehachse 56 drehbar gelagert und kann das Erntegut von einer ursprünglichen Aufnahmebreite der Aufsammeltrommel 53 auf eine geringere Breite eines in Förderrichtung nachgelagerten Erntegutkanals 57 zusammenführen. Zudem kann das Förderorgan das Erntegut einem in Förderrichtung nachgelagerten Förderrotor 58 zuführen. Der Förderrotor 58 ist um eine Rotorachse drehbar gelagert und weist eine Vielzahl von zueinander beabstandet angeordneten, sternförmigen Rotorelementen 59 auf, welche in den Erntegutkanal 57 hineinwirken, um das Erntegut beispielsweise zur Verdichtung in Richtung der Presskammer 50 zu fördern.

Unterhalb des Förderrotors 58 ist eine Schneidvorrichtung 60 angeordnet, welche eine Vielzahl von Schneidelementen aufweist, die zum Zerkleinern des Erntegutes durch ein an die Aufsammeltrommel 53 angrenzendes Bodenelement 61 zumindest teilweise in den Erntegutkanal 57 hineinschwenkbar ausgebildet sind. Das zerkleinerte Erntegut wird anschließend der Presskammer 50 zugeführt, welche innerhalb eines Gehäuses 62 der Ballenpresse 49 durch kreisförmig angeordnete und antreibbare Presswalzen 63 ausgebildet ist.

Der Ballenpresse 49 ist eine Steuerungseinrichtung 65 zugeordnet, die unmittelbar an der Ballenpresse 49 oder an dem Zugfahrzeug angeordnet sein kann. Eine Sensoranordnung 64 ist an dem Zugfahrzeug angeordnet und steht durch ein Bussystem 66 mit der Steuerungseinrichtung 65 zur Übermittlung von Signalen in Verbindung, welche von der Steuerungseinrichtung 65 ausgewertet werden. Die Steuerungseinrichtung 65 dient der Ansteuerung der Arbeitsorgane der Ballenpresse 49 sowie des Zugfahrzeugs. Mittels der Sensoranordnung 64 ist eine vorausschauende Analyse des aufzunehmenden Schwads möglich.

Die Aufnahme eines Schwads durch eine der vorstehend genannten landwirtschaftlichen Arbeitsmaschinen 1 erfolgt aufgrund voreingestellter Arbeitsparameter zur Ansteuerung der Arbeitsorgane sowie der Fahrgeschwindigkeit, die von einer Bedienperson voreingestellt oder ausgewählt werden und an die jeweilige Steuerungseinrichtung 24, 46, 65 übertragen werden. Die Steuerungseinrichtung 24, 46, 65 ist dazu eingerichtet, eine Aktuatorik der Arbeitsorgane sowie den Antriebsmotor der landwirtschaftlichen Arbeitsmaschine 1 unmittelbar oder mittelbar, durch das Übertragen von Steuersignalen an Steuergeräte z.B. des Antriebsmotors, anzusteuern.

Bei der Aufnahme eines Schwads durch eine der vorstehend genannten landwirtschaftlichen Arbeitsmaschinen 1, kann es aufgrund von Unregelmäßigkeiten in dem aufzunehmenden Schwad zur Problemen kommen, die Einfluss auf die Betriebssituation der Arbeitsmaschine 1 haben. Insbesondere können Gutflussprobleme in der Arbeitsmaschine 1 auftreten, wodurch unter anderem die Arbeitsqualität bei der Bearbeitung des Ernteguts beeinflusst wird. Denkbar ist auch das Auftreten eines Gutstaues an einem Arbeitsorgan der Arbeitsmaschine 1, dessen Beseitigung in der Regel mit einem großen Aufwand verbunden ist.

Unregelmäßigkeiten in dem aufzunehmenden Schwad können sich beispielsweise aufgrund von Windverwehungen oder durch Fehler beim Schwadlegen einstellen. Die Beschaffenheit des Feldbodens sowie Schwankungen im Bestand des Erntegutes, welches nach einem Abtrennvorgang zum Schwad gelegt wird, können gleichfalls zu Unregelmäßigkeiten im Schwad führen. Die Unregelmäßigkeiten können sich des Weiteren in unterschiedlichen Höhen oder Volumina des aufgenommenen Schwads, durch einen seitlichen Versatz, eine Breitenänderung des Schwads, ein Verdrehen des Schwads, eine sich ändernde Ausrichtung von Halmen im Schwad, unterschiedliche Schwaddichte, unterschiedliche Feuchtigkeit, unterschiedliche Farben des Schwads oder eine unterschiedliche umliegende Stoppelhöhe äußern. Eine Unregelmäßigkeit eines Schwads kann sich über einen oder mehrere Teilabschnitte aber auch über dessen gesamte Länge erstrecken. D.h. es gibt viele Arten von Unregelmäßigkeiten, die einzeln oder in Kombination miteinander auftreten können.

Derartige Unregelmäßigkeiten in einem aufzunehmenden Schwad lassen sich durch die Sensoranordnung 23, 47, 64 an der Arbeitsmaschine 1 vorausschauend erkennen. Die durch die Sensoranordnung 23, 47, 64 bereitgestellten Signale werden von der Steuerungseinrichtung 24, 46, 65 ausgewertet, um nur bei einer Detektion des Auftretens einer Unregelmäßigkeit geeignete Maßnahmen einzuleiten.

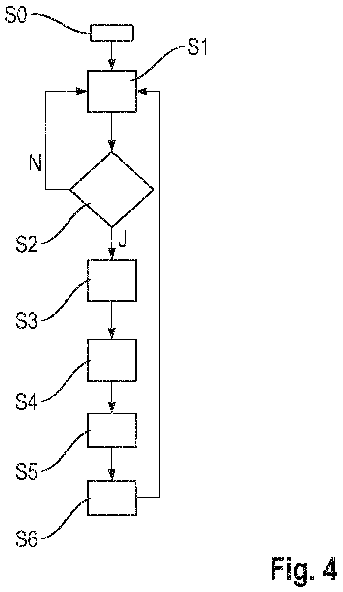

Fig. 4 zeigt ein Ablaufdiagramm des Verfahrens zum Betreiben einer landwirtschaftlichen Arbeitsmaschine 1. Im Schritt S0 werden zu Beginn des Erntevorgangs Arbeitsparameter für die Arbeitsmaschine 1 von einer Bedienperson voreingestellt. Anschließend wird in einem ersten Schritt S1 die Auswertung der Signale der zumindest einen durch die zumindest eine Sensoranordnung 23, 47, 64 detektierten Eigenschaft von der Steuerungseinrichtung 24, 46, 65 durchgeführt, um das Auftreten einer Unregelmäßigkeit im Schwad zu erkennen. Um nicht auf jede auftretende geringfügige Unregelmäßigkeit reagieren zu müssen, kann vorgesehen sein, in einem zweiten Schritt S2 die Unregelmäßigkeit hinsichtlich ihrer Art zu klassifizieren, um anschließend anhand eines Soll-Ist-Vergleichs zu entscheiden, ob das Einleiten von Maßnahmen sinnvoll ist, um auf die Unregelmäßigkeit im Schwad zu reagieren. Hierfür sind für jede Art von Unregelmäßigkeit, die klassifizierbar ist, Toleranzwerte hinterlegt. Erst bei einem Überschreiten eines oder mehrerer der Toleranzwerte werden die Maßnahmen eingeleitet, mit denen die landwirtschaftliche Arbeitsmaschine 1 auf das Erkennen des Auftretens der Unregelmäßigkeit reagiert. Auf diese Weise lassen sich unnötige Eingriffe in den Betriebsablauf der Arbeitsmaschine 1 vermeiden.

Liegen die Voraussetzungen für das Einleiten von Maßnahmen vor, wird in einem dritten Schritt S3 eine automatische Anpassung der Aufnahmegeschwindigkeit mit dem Erkennen des Auftretens der Unregelmäßigkeit von der Steuerungseinrichtung 24, 46, 65 durchgeführt, mit der die Arbeitsmaschine 1 den Schwad aufnimmt. Hierbei wird eine Fahrgeschwindigkeit der Arbeitsmaschine 1 reduziert. Verneinendenfalls wird zu dem Schritt S1 zurückgesprungen.

Anschließend wird in einem vierten Schritt S4 eine Anpassung zumindest eines Arbeitsparameters zur Ansteuerung der Aufnahmevorrichtung und/oder des zumindest einen Arbeitsorgans der landwirtschaftlichen Arbeitsmaschine 1 durch die Steuerungseinrichtung 24, 46, 65 durchgeführt.

In einem fünften Schritt wird die Bereitstellung einer maximalen Antriebsleistung durch eine entsprechende Ansteuerung des Antriebsmotors 4, 41, der die Arbeitsmaschine 1 mit der notwendigen Antriebsleistung versorgt, durch die Steuerungseinrichtung 24, 46, 65 durchgeführt.

In einem sechsten Schritt erfolgt die Bearbeitung der Unregelmäßigkeit anhand der in den vorangehenden Schritten spezifisch angepassten Arbeitsparameter. Die Dauer der Bearbeitung hängt vom Umfang bzw. der Länge der Unregelmäßigkeit im Schwad ab. Das Ende der Unregelmäßigkeit im Schwad wird wegen der vorausschauen Detektion durch die Sensoranordnung 23, 47, 64 erkannt, bevor die Arbeitsmaschine 1 diese Position des Schwads erreicht.

Mit dem Erreichen des Endes der Unregelmäßigkeit im Schwad wird die Rückführung aller geänderter Arbeitsparameter auf die von der Bedienperson voreingestellten Arbeitsparameter durchgeführt. Im Anschluss wird zu dem Schritt S1 zurückgesprungen, um die Detektion und Auswertung fortzusetzen.

Bei einer als selbstfahrender Mähdrescher 2 oder selbstfahrender Feldhäcksler 27 ausgeführten landwirtschaftlichen Arbeitsmaschine 1 ist die Steuerungseinrichtung 24, 46 dazu eingerichtet, als zumindest einen Arbeitsparameter zur Ansteuerung der Aufnahmevorrichtung 5, 28 und/oder des zumindest einen Arbeitsorganes die Einzugsgeschwindigkeit zu reduzierten. Hierzu ist die Steuerungseinrichtung 24, 46 dazu eingerichtet, die Drehzahl einer Antriebsvorrichtung der Aufnahmevorrichtung 5, 28 zu reduzieren.

Insbesondere kann bei einem Mähdrescher 2 zur Reduzierung der Einzugsgeschwindigkeit eine Drehrichtungsumkehr eines Reversiermotors des Schrägförderers 7 als Arbeitsparameter durch die Steuerungseinrichtung 24 angesteuert werden. Auf diese Weise lässt sich im Fall eines geringen Schwadvolumens als detektierte Unregelmäßigkeit in dem Schrägförderer 7 ein Erntegutpuffer aufbauen, der dann zeitlich versetzt den nachfolgenden Arbeitsorganen 8, 13, 16 zugeführt wird.

Weiterhin kann bei dem Mähdrescher 2 vorgesehen sein, dass die Steuerungseinrichtung 24 dazu eingerichtet ist, als zumindest einen weiteren Arbeitsparameter die Drehzahl zumindest der Dreschtrommel 10 und /oder des Förderorgans 17 zu erhöhen. Des Weiteren kann im Fall des Mähdreschers 2 die Steuerungseinrichtung 24 dazu eingerichtet sein, einen stattfindenden Überladevorgang zu unterbrechen. Hierzu kann durch die Steuerungseinrichtung 24 die temporäre Abschaltung der Korntankentleervorrichtung 22 veranlasst werden. Die Anpassung eines oder mehrerer Arbeitsparameter des Mähdreschers 2 hängt dabei von der Art der Unregelmäßigkeit des Schwads ab.

Bei der Ausführung der landwirtschaftlichen Arbeitsmaschine 1 als selbstfahrender Feldhäcksler 27 kann die Steuerungseinrichtung 46 dazu eingerichtet sein, die Schnittlänge zu variieren. Hierzu kann die Drehzahl der Einzugswalzen 34 des Einzugsorgans 33 und/oder der Häckseltrommel 36 variiert werden. Weiterhin kann die Steuerungseinrichtung 46 dazu eingerichtet sein, als einen weiteren Arbeitsparameter die Gutvorpressung durch die Vorpresswalzen 35 anzupassen. Des Weiteren kann die Steuerungseinrichtung 46 dazu eingerichtet sein, die Höhe der Niederhaltereinrichtung 30 anzupassen. Die Anpassung eines oder mehrerer Arbeitsparameter des Feldhäckslers 27 hängt dabei ebenfalls von der Art der Unregelmäßigkeit des Schwads ab.

Weiter bevorzugt kann die Steuerungseinrichtung 65 dazu eingerichtet sein, die Fahrgeschwindigkeit des Zugfahrzeugs der gezogenen Ballenpresse 49 für die Dauer der Unregelmäßigkeit zu reduzieren. Weiterhin kann die Steuerungseinrichtung 65 dazu eingerichtet sein, die Schneidelemente der Schneidvorrichtung 60 auszuschwenken, um einem Gutstau vorzubeugen.

**Bezugszeichenliste**

| | | | |
|---|---|---|---|
| 1 | Arbeitsmaschine | 28 | Aufnahmevorrichtung |
| 2 | Mähdrescher | 29 | Schwad |
| 3 | Korntank | 30 | Niederhaltereinrichtung |
| 4 | Antriebsmotor | 31 | Aufsammeltrommel |
| 5 | Aufnahmevorrichtung | 32 | Querförderschnecke |
| 6 | Niederhalter | 33 | Einzugsorgan |
| 7 | Schrägförderer | 34 | Einzugswalze |
| 8 | Dresch- und Trenneinrichtung | 35 | Vorpresswalze |
| 9 | Vorbeschleunigungstrommel | 36 | Häckseltrommel |
| 9a | Abscheidekorb | 37 | Nachzerkleinerungseinrichtung |
| 10 | Dreschtrommel | 38 | Nachbeschleuniger |
| 10a | Abscheidekorb | 39 | Auswurfschacht |
| 11 | Abscheidetrommel | 40 | Auswurfkrümmer |
| 11a | Abscheidekorb | 41 | Antriebsmotor |
| 12 | Vorbereitungsboden | 42 | Riemenscheibe |
| 13 | Reinigungsvorrichtung | 43 | Antriebsriemen |
| 14 | Reinigungsgebläse | 44 | Kabine |
| 15 | Körnerschnecke | 45 | Ein- und Ausgabeeinheit |
| 16 | Abscheidevorrichtung | 46 | Steuerungseinrichtung |
| 17 | Förderorgan | 47 | Sensoranordnung |
| 18 | Abscheidegehäuse | 48 | Bussystem |
| 19 | Rücklaufboden | 49 | Ballenpresse |
| 20 | Förderschnecke | 50 | Presskammer |
| 21 | Strohhäcksler | 51 | Ballen |
| 22 | Korntankentleervorrichtung | 52 | Aufnahmevorrichtung |
| 23 | Sensoranordnung | 53 | Aufsammeltrommel |
| 24 | Steuerungseinrichtung | 54 | Zinken |
| 25 | Fahrerkabine | 55 | Förderorgan |
| 26 | Bussystem | 56 | Drehachse |
| 27 | Feldhäcksler | 57 | Erntegutkanal |
| 58 | | Förderrotor | |
| 59 | | Rotorelement | |
| 60 | | Schneidvorrichtung | |
| 61 | | Bodenelement | |
| 62 | | Gehäuse | |
| 63 | | Presswalze | |
| 64 | | Sensoranordnung | |
| 65 | | Steuerungseinrichtung | |
| 66 | | Bussystem | |
| S0 bis S6 | | Schritt | |

## Patentansprüche

1. Landwirtschaftliche Arbeitsmaschine (1), die zur Aufnahme eines auf einem Feldboden abgelegten Schwads mit voreingestellten Arbeitsparametern eingerichtet ist, umfassend eine steuer- oder regelbare Aufnahmevorrichtung (5, 28, 52) zur Aufnahme des Schwads, zumindest ein steuer- oder regelbares Arbeitsorgan (7, 8, 16, 33, 60) zur Bearbeitung des aufgenommenen Schwads, zumindest eine Sensoranordnung (23, 47, 64) zur Detektion zumindest einer Eigenschaft des auf dem Feldboden abgelegten Schwads sowie eine Steuerungseinrichtung (24, 46, 65), die zur Auswertung von Signalen der zumindest einen Sensoranordnung (23, 47, 64) sowie zur Ansteuerung der Aufnahmevorrichtung (5, 28, 52) und des zumindest einen Arbeitsorgans anhand von vorgegebenen Arbeitsparametern eingerichtet ist, **dadurch gekennzeichnet, dass** die Steuerungseinrichtung (24, 46, 64) dazu eingerichtet ist, durch die Auswertung der zumindest einen detektierten Eigenschaft das Auftreten einer Unregelmäßigkeit im Schwad zu erkennen und nur für die Dauer der Unregelmäßigkeit im Schwad eine automatische Anpassung der Aufnahmegeschwindigkeit, mit der die Arbeitsmaschine (1) den Schwad aufnimmt, und zumindest eines Arbeitsparameters zur Ansteuerung der Aufnahmevorrichtung (5, 28, 52) und/oder des zumindest einen Arbeitsorgans (7, 8, 16, 33, 60) der landwirtschaftlichen Arbeitsmaschine (1) vorzunehmen, wobei die zumindest eine Sensoranordnung (23, 47, 64) für eine vorausschauende Detektion eines Beginns und eines Endes des Auftretens der Unregelmäßigkeit eingerichtet ist, wobei die Steuerungseinrichtung (24, 46, 64) dazu eingerichtet ist, anhand des detektierten Beginns und Endes des Auftretens der Unregelmäßigkeit die voraussichtliche Bearbeitungsdauer der Unregelmäßigkeit durch die landwirtschaftliche Arbeitsmaschine (1) zu bestimmen, wobei die Steuerungseinrichtung (24, 46, 64) dazu eingerichtet ist, nach der Aufnahme und Bearbeitung des unregelmäßigen Schwads die Änderung von Fahrgeschwindigkeit und des zumindest einen Arbeitsparameters auf die voreingestellten zurückzuführen.

2. Landwirtschaftliche Arbeitsmaschine (1) nach Anspruch 1, **dadurch gekennzeichnet, dass** die Steuerungseinrichtung (24, 46, 64) dazu eingerichtet ist, Arten von Unregelmäßigkeiten zu klassifizieren und zu gewichten.

3. Landwirtschaftliche Arbeitsmaschine (1) nach Anspruch 1 oder 2, **dadurch gekennzeichnet, dass** die Steuerungseinrichtung (24, 46, 64) dazu eingerichtet ist, die Fahrgeschwindigkeit einer als selbstfahrenden Erntemaschine (2, 27) ausgeführten landwirtschaftlichen Arbeitsmaschine (1) für die Dauer der Unregelmäßigkeit zu reduzieren.

4. Landwirtschaftliche Arbeitsmaschine (1) nach Anspruch 1 oder 2, **dadurch gekennzeichnet, dass** die Steuerungseinrichtung (24, 46, 64) dazu eingerichtet ist, die Fahrgeschwindigkeit eines Zugfahrzeugs einer gezogenen, als eine Ballenpresse (49) oder als ein Ladewagen ausgeführten, landwirtschaftlichen Arbeitsmaschine (1) für die Dauer der Unregelmäßigkeit zu reduzieren.

5. Landwirtschaftliche Arbeitsmaschine (1) nach einem der Ansprüche 1 bis 4, **dadurch gekennzeichnet, dass** die Steuerungseinrichtung (24, 46, 64) dazu eingerichtet ist, einen Antriebsmotor (4, 41) der landwirtschaftlichen Arbeitsmaschine (1) oder des Zugfahrzeugs zur Bereitstellung seiner maximalen Motorleistung für die Dauer der Unregelmäßigkeit bereitzustellen.

6. Landwirtschaftliche Arbeitsmaschine (1) nach einem der Ansprüche 1 bis 5, **dadurch gekennzeichnet, dass** die zumindest eine Sensoranordnung (23, 47, 64) zur berührungslosen Detektion der zumindest einen Eigenschaft des auf dem Feldboden abgelegten Schwads eingerichtet ist.

7. Landwirtschaftliche Arbeitsmaschine (1) nach einem der Ansprüche 1 bis 6, **dadurch gekennzeichnet, dass** die zumindest eine Sensoranordnung (23, 47, 64) Tastmittel zur Detektion der zumindest einen Eigenschaft des auf dem Feldboden abgelegten Schwads aufweist.

8. Landwirtschaftliche Arbeitsmaschine (1) nach einem der Ansprüche 1 bis 7, **dadurch gekennzeichnet, dass** die zumindest eine Sensoranordnung (23, 47, 64) als eine optische Sensoranordnung ausgeführt ist, insbesondere als Laserscanner oder Kamera.

9. Verfahren zum Betreiben einer landwirtschaftlichen Arbeitsmaschine (1), in welchem zumindest ein auf einem Feldboden abgelegter Schwad mit voreingestellten Arbeitsparametern aufgenommen wird, wobei der Schwad durch eine steuer- oder regelbare Aufnahmevorrichtung (5, 28, 52) aufgenommen und der aufgenommene Schwad durch zumindest ein steuer- oder regelbares Arbeitsorgan (7, 8, 16, 33, 60) bearbeitet wird, wobei durch zumindest eine Sensoranordnung (23, 47, 64) zumindest eine Eigenschaft des auf dem Feldboden abgelegten Schwads detektiert wird, sowie dass eine Steuerungseinrichtung (24, 46, 64) verwendet wird, durch welche Signale der zumindest einen Sensoranordnung (23, 47, 64) auswertet sowie die Aufnahmevorrichtung (5, 28, 52) und das zumindest eine Arbeitsorgans (7, 8, 16, 33, 60) anhand von voreingestellten Arbeitsparametern angesteuert werden, **gekennzeichnet durch die Verfahrensschritte,**
a. Auswertung der Signale der zumindest einen durch die zumindest eine Sensoranordnung (23, 47, 64) detektierten Eigenschaft, um das Auftreten einer Unregelmäßigkeit im Schwad zu erkennen,
b. automatische Anpassung der Aufnahmegeschwindigkeit mit dem Erkennen des Auftretens der Unregelmäßigkeit, mit der die Arbeitsmaschine (1) den Schwad aufnimmt,
c. Anpassung zumindest eines Arbeitsparameters zur Ansteuerung der Aufnahmevorrichtung (5, 28, 52) und/oder des zumindest einen Arbeitsorgans (7, 8, 16, 33, 60) der landwirtschaftlichen Arbeitsmaschine (1),
d. Bereitstellung einer maximalen Antriebsleistung durch Ansteuerung eines Antriebsmotors (4, 41), der die Arbeitsmaschine (1) mit der erforderlichen Antriebsleistung versorgt,
e. Bearbeitung der Unregelmäßigkeit, und
f. Rückführung aller geänderter Arbeitsparameter auf die voreingestellten Arbeitsparameter.

10. Verfahren nach Anspruch 9, **dadurch gekennzeichnet, dass** die Signale der zumindest einen durch die zumindest eine Sensoranordnung (23, 47, 64) detektierten Eigenschaft ausgewertet werden, um das Ende des Auftretens der Unregelmäßigkeit im Schwad zu bestimmen und die Art der Unregelmäßigkeit zu klassifizieren und zu gewichten.

## Claims

1. An agricultural working machine (1) which is configured with predefined working parameters in order to pick up a swathe deposited on a field surface, comprising a controllable or regulatable pickup device (5, 28, 52) for picking up the swathe, at least one controllable or regulatable working unit (7, 8, 16, 33, 60) for processing the swathe which has been picked up, at least one sensor assembly (23, 47, 64) for the detection of at least one property of the swathe deposited on the field surface, as well as a control device (24, 46, 65) which is configured for the analysis of signals from the at least one sensor assembly (23, 47, 64) as well as for the control of the pickup device (5, 28, 52) and the at least one working unit with the aid of predefined working parameters, **characterized in that** the control device (24, 46, 64) is configured in a manner such as to detect an irregularity in the swathe by means of the analysis of the at least one detected property, and to make an automatic adjustment to the pickup speed at which the working machine (1) picks up the swathe for only the duration of the irregularity in the swathe and to at least one working parameter in order to control the pickup device (5, 28, 52) and/or the at least one working unit (7, 8, 16, 33, 60) of the agricultural working machine (1), wherein **in that** the at least one sensor assembly (23, 47, 64) is configured for a proactive detection of a beginning and an end of the occurrence of the irregularity, wherein the control device (24, 46, 64) is configured to determine the anticipated processing duration for the irregularity by means of the agricultural working machine (1) with the aid of the detected beginning and end of the occurrence of the irregularity, wherein the control device (24, 46, 64) is configured such that, after picking up and processing the irregularity swathe, the drive speed and the at least one working parameter which have been changed are restored to the predefined working parameters.

2. The agricultural working machine (1) according to claim 1, **characterized in that** the control device (24, 46, 64) is configured to classify and rate types of irregularities.

3. The agricultural working machine (1) according to claim 1 or claim 2, **characterized in that** the control device (24, 46, 64) is configured to reduce the drive speed of an agricultural working machine (1) configured as a self-propelled harvesting machine (2, 27) for the duration of the irregularity.

4. The agricultural working machine (1) according to claim 1 or claim 2, **characterized in that** the control device (24, 46, 64) is configured to reduce the drive speed of a traction vehicle of a towed agricultural working machine (1) configured as a baler (49) or as a loading vehicle for the duration of the irregularity.

5. The agricultural working machine (1) according to one of claims 1 to 4, **characterized in that** the control device (24, 46, 64) is configured such that a propulsion engine (4, 41) of the agricultural working machine (1) or of the traction vehicle is provided in order to provide a maximized engine performance for the duration of the irregularities.

6. The agricultural working machine (1) according to one of claims 1 to 5, **characterized in that** the at least one sensor assembly (23, 47, 64) is configured for contactless detection of the at least one property of the swathe deposited on the field surface.

7. The agricultural working machine (1) according to one of claims 1 to 6, **characterized in that** the at least one sensor assembly (23, 47, 64) has feeler means for the detection of the at least one property of the swathe deposited on the field surface.

8. The agricultural working machine (1) according to one of claims 1 to 7, **characterized in that** the at least one sensor assembly (23, 47, 64) is configured as an optical sensor assembly, in particular as a laser scanner or camera.

9. A method for operating an agricultural working machine (1), in which at least one swathe deposited on a field surface is picked up using predefined working parameters, wherein the swathe is picked up by means of a controllable or regulatable pickup device (5, 28, 52) and the swathe which has been picked up is processed by means of at least one controllable or regulatable working unit (7, 8, 16, 33, 60), wherein at least one property of the swathe deposited on the field surface is detected by means of at least one sensor assembly (23, 47, 64), and wherein a control device (24, 46, 64) is used by means of which signals from the at least one sensor assembly (23, 47, 64) are analysed and wherein the pickup device (5, 28, 52) and the at least one working unit (7, 8, 16, 33, 60) are controlled with the aid of predefined working parameters, **characterized by the method steps of:**
a. analysing the signals from the at least one property detected by means of the at least one sensor assembly (23, 47, 64) in order to detect the occurrence of an irregularity in the swathe,
b. automatically adjusting the pickup speed at which the working machine (1) picks up the swathe upon detection of the occurrence of the irregularity,
c. adjusting at least one working parameter in order to control the pickup device (5, 28, 52) and/or the at least one working unit (7, 8, 16, 33, 60) of the agricultural working machine (1),
d. providing a maximum propulsive power by controlling a propulsion engine (4, 41) which supplies the working machine (1) with the required propulsive power,
e. processing the irregularity, and
f. restoring all of the changed working parameters to the predefined working parameters.

10. The method according to claim 9, **characterized in that** the signals from the at least one property detected by the at least one sensor assembly (23, 47, 64) are analysed in order to determine the end of the occurrence of the irregularity in the swathe and to classify and rate the type of irregularity.

## Revendications

1. Machine de travail agricole (1) qui est agencée pour ramasser avec des paramètres de travail préréglés un andain déposé sur un sol de champ, incluant un dispositif de ramassage commandable ou régulable (5, 28, 52) pour le ramassage de l'andain, au moins un organe de travail commandable ou régulable (7, 8, 16, 33, 60) pour le traitement de l'andain ramassé, au moins un agencement de capteur (23, 47, 64) pour la détection au moins d'une propriété de l'andain déposé sur le sol de champ, ainsi qu'un équipement de commande (24, 46, 65) qui est agencé pour analyser des signaux de l'agencement de capteur (23, 47, 64), au nombre d'au moins un, ainsi que pour agir sur le dispositif de ramassage (5, 28, 52) et l'organe de travail, au nombre d'au moins un, à l'aide de paramètres de travail prescrits, **caractérisée en ce que** l'équipement de commande (24, 46, 64) est agencé pour déceler, par l'intermédiaire de l'analyse de la propriété détectée, au nombre d'au moins une, l'apparition d'une irrégularité dans l'andain et pour procéder, seulement pour la durée de l'irrégularité dans l'andain, à une adaptation automatique de la vitesse de ramassage, à laquelle la machine de travail (1) ramasse l'andain, et d'au moins un paramètre de travail, pour agir sur le dispositif de ramassage (5, 28, 52) et/ou l'organe de travail (7, 8, 16, 33, 60), au nombre d'au moins un, de la machine de travail agricole (1), l'agencement de capteur (23, 47, 64), au nombre d'au moins un, étant agencé pour une détection prédictive d'un début et d'une fin de l'apparition de l'irrégularité, l'équipement de commande (24, 46, 64) étant agencé pour déterminer, à l'aide du début et de la fin détectés de l'apparition de l'irrégularité, la durée de traitement prévisible de l'irrégularité par la machine de travail agricole (1), l'équipement de commande (24, 46, 64) étant agencé pour ramener, après le ramassage et le traitement de l'andain irrégulier, la modification de la vitesse de marche et du paramètre de travail, au nombre d'au moins un, aux valeurs prédéfinies.

2. Machine de travail agricole (1) selon la revendication 1, **caractérisée en ce que** l'équipement de commande (24, 46, 64) est agencé pour classifier et pondérer des types d'irrégularités.

3. Machine de travail agricole (1) selon la revendication 1 ou 2, **caractérisée en ce que** l'équipement de commande (24, 46, 64) est agencé pour réduire, pour la durée de l'irrégularité, la vitesse de marche d'une machine de travail agricole (1) conformée en machine de récolte automotrice (2, 27).

4. Machine de travail agricole (1) selon la revendication 1 ou 2, **caractérisée en ce que** l'équipement de commande (24, 46, 64) est agencé pour réduire, pour la durée de l'irrégularité, la vitesse de marche d'un véhicule de traction d'une machine de travail agricole (1) tractée, conformée en presse à balles (49) ou en remorque autochargeuse.

5. Machine de travail agricole (1) selon une des revendications 1 à 4, **caractérisée en ce que** l'équipement de commande (24, 46, 64) est agencé pour fournir, pour la durée de l'irrégularité, un moteur d'entraînement (4, 41) de la machine de travail agricole (1) ou du véhicule de traction, pour qu'il fournisse sa puissance de moteur maximale.

6. Machine de travail agricole (1) selon une des revendications 1 à 5, **caractérisée en ce que** l'agencement de capteur (23, 47, 64), au nombre d'au moins un, est agencé pour une détection sans contact de la propriété, au nombre d'au moins une, de l'andain déposé sur le sol de champ.

7. Machine de travail agricole (1) selon une des revendications 1 à 6, **caractérisée en ce que** l'agencement de capteur (23, 47, 64), au nombre d'au moins un, présente des moyens de palpage destinés à la détection de la propriété, au nombre d'au moins une, de l'andain déposé sur le sol de champ.

8. Machine de travail agricole (1) selon une des revendications 1 à 7, **caractérisée en ce que** l'agencement de capteur (23, 47, 64), au nombre d'au moins un, est réalisé sous la forme d'un agencement de capteur optique, notamment comme scanner au laser ou caméra.

9. Procédé de fonctionnement d'une machine de travail agricole (1), selon lequel au moins un andain déposé sur un sol de champ est ramassé avec des paramètres de travail préréglés, l'andain étant ramassé par l'intermédiaire d'un dispositif de ramassage commandable ou régulable (5, 28, 52), et l'andain ramassé étant traité par l'intermédiaire d'au moins un organe de travail commandable ou régulable (7, 8, 16, 33, 60), au moins une propriété de l'andain déposé sur le sol de champ étant détectée par l'intermédiaire d'au moins un agencement de capteur (23, 47, 64), et en ce qu'est utilisé un équipement de commande (24, 46, 64) par l'intermédiaire duquel des signaux de l'agencement de capteur (23, 47, 64), au nombre d'au moins un, sont analysés, et que le dispositif de ramassage (5, 28, 52) et l'organe de travail (7, 8, 16, 33, 60), au nombre d'au moins un, sont activés à l'aide de paramètres de travail préréglés, **caractérisé en ce qu'il présente les étapes de procédé suivantes** :
a. analyse des signaux de la propriété, au nombre d'au moins une, détectée par l'agencement de capteur (23, 47, 64), au nombre d'au moins un, aux fins de détecter l'apparition d'une irrégularité dans l'andain,
b. adaptation automatique de la vitesse de ramassage à laquelle la machine de travail (1) ramasse l'andain, lors de la détection de l'apparition de l'irrégularité,
c. adaptation d'au moins un paramètre de travail pour agir sur le dispositif de ramassage (5, 28, 52) et/ou l'organe de travail (7, 8, 16, 33, 60), au nombre d'au moins un, de la machine de travail agricole (1),
d. mise à disposition d'une puissance d'entraînement maximale en agissant sur un moteur d'entraînement (4, 41) qui alimente la machine de travail (1) avec la puissance d'entraînement requise,
e. traitement de l'irrégularité, et
f. retour de tous les paramètres de travail modifiés aux paramètres de travail préréglés.

10. Procédé selon la revendication 9, **caractérisé en ce que** les signaux de la propriété, au nombre d'au moins une, détectée par l'intermédiaire de l'agencement de capteur (23, 47, 64), au nombre d'au moins un, sont analysés en vue de déterminer la fin de l'apparition de l'irrégularité dans l'andain et de classifier et de pondérer le type d'irrégularité.
